# EUROPEAN PATENT APPLICATION

(11) **EP 3 240 347 A1**
(43) Date of publication of application: **01.11.2017**
(21) Application number: 15871816.3
(22) Date of filing: 24.11.2015
(51) Int. Cl.: H04W 72/12, H04W 52/02, H04W 68/02

(54) **DOWNLINK INFORMATION TRANSMISSION METHOD AND DEVICE**

(30) Priority: 23.12.2014 CN 201410814326; 11.05.2015 CN 201510236650
(71) Applicant: ZTE Corporation, Shenzhen, Guangdong 518057 (CN)
(72) Inventor: ZHANG, Wen, Shenzhen Guangdong 518057 (CN); XIA, Shuqiang, Shenzhen Guangdong 518057 (CN)
(74) Representative: Deambrogi, Edgardo
(86) International application number: PCT/CN2015/095446
(87) International publication number: WO 2016/101747

(57) **Abstract**

A method and device for sending downlink information are provided. Specified information to be sent to User Equipment (UE) is determined, and the specified information may include at least one of: system message change information, Earthquake and Tsunami Warning System (ETWS) notification information, Commercial Mobile Alert Service (CMAS) notification information or Extended Access Barring (EAB) parameter change notification information. The specified information is sent to the UE according to a predetermined manner, and the predetermined manner is different from a manner of sending the specified information through a paging message. By adopting the method, the problems in the related technology that the UE may need to receive many repeated unnecessary paging messages and the like are solved, so that influence on dedicated information reception of the UE is reduced, and the problem of energy consumption of the UE caused by reception of lots of repeated paging messages is solved.

## Description

### Technical Field

The present disclosure relates to the field of communications, and particularly to a method and device for sending downlink information.

### Background

A Machine Type Communication (MTC) device (also called as MTC User Equipment (UE) or Machine to Machine (M2M) user communication equipment), is currently a main application form of the Internet of Things.

In recent years, more and more mobile operating companies have selected Long-Term Evolution or Long-Term Evolution Advance (LTE or LTE-A) as an evolution direction of a wideband wireless communication system due to relatively high spectral efficiency of an LTE or LTE-A system. Various types of LTE or LTE-A-based MTC data services may attract more attention.

MTC equipment is usually low-cost equipment, and may have characteristics of supporting relatively small Radio Frequency (RF) bandwidth, single receiving antenna and the like. There is a type of MTC equipment, such as an ammeter, which may be placed in a metal cabinet of a basement, so that this type of MTC equipment may be under a very poor coverage. The 3rd Generation Partnership Project (3GPP) sets up a project in Release 12 (R12) and Release 13 (R13) to provide a solution for low-cost MTC UE with a coverage enhancement requirement. At present, the solution to coverage enhancement is to enhance coverage by lots of repetitions of some channels.

In an existing LTE system, a paging message may be sent to UE in an idle state or a connected state. A paging process may be triggered by a core network to notify certain UE of receiving a paging request, or may be triggered by an Evolved Node B (eNB) to notify system information updating and notify UE of receiving information of e.g., an Earthquake and Tsunami Warning System (ETWS), Commercial Mobile Alert Service (CMAS) and the like. Paging has at least one of the following purposes of:
sending paging information to UE in a Radio Resource Control (RRC) idle state, where the paging information may be information indicating that the UE in the RRC idle state is called;
notifying UE in an RRC connected state or idle state of a system message change;
notifying UE of ETWS primary notification and/or auxiliary notification information; or
notifying UE of CMAS notification information.

A paging message is public information and may be sent on a paging subframe. Each paging message may include all of the abovementioned information, i.e. system message change information, the ETWS notification information and the CMAS notification information, or a subset of the information (if the information is required to be sent on the paging subframe). Before the paging message is received, a terminal may need to monitor a Physical Downlink Control Channel (PDCCH) and then judge whether the paging message is sent from a network in a current paging period or not according to whether the PDCCH contains a Paging Radio Network Temporary Identifier (P-RNTI) or not. The terminal may receive the paging message if the P-RNTI is detected on the PDCCH. For UE in an RRC connected state, an eNB may not send paging information to the UE, and the UE may need to receive the system message change information, the ETWS notification information and the CMAS notification information. However, the UE is still required to receive the whole paging message during reception.

For UE with a coverage enhancement requirement and in a connected state, for correctly receiving paging messages, the UE may need to receive much repeated control information for scheduling the paging messages and lots of repeated paging messages. On one hand, dedicated information reception of MTC UE which only supports an RF narrow band may be influenced. On the other hand, if dedicated information is sent on another narrow band, it may be unfavorable for energy saving of the MTC UE. Even though a blind transmission manner is adopted for the paging messages, that is, no scheduling via the control information is adopted, since the paging messages include relatively much information and a Transmission-Block Size (TBS) is relatively large, it may still be necessary to receive lots of repeated paging messages.

For the problem in a related technology, there is yet no effective solution at present.

### Summary

Some embodiments of the present disclosure provide a method and device for sending downlink information, so as to at least solve the problems in the related technology that UE may need to receive many repeated unnecessary paging messages and the like.

According to an exemplary embodiment of the present disclosure, a method for sending downlink information is provided, which may include the following acts. Specified information to be sent to UE is determined, and the specified information may include at least one of: system message change information, ETWS notification information, CMAS notification information or Extended Access Barring (EAB) parameter change notification information. The specified information is sent to the UE according to a predetermined manner, and the predetermined manner may be different from a manner of sending the specified information through a paging message.

In an exemplary embodiment of the present disclosure, the predetermined manner may include one of: sending the specified information through existing Downlink Control Information (DCI) for scheduling; sending the specified information through DCI dedicated to sending of the specified information; sending the specified information through a Physical Downlink Shared Channel (PDSCH) or Physical Uplink Shared Channel (PUSCH) scheduled by DCI dedicated to sending of the specified information; sending the specified information through Master Information Block (MIB) information; or sending the specified information through a channel dedicated to sending of the specified information.

In an exemplary embodiment of the present disclosure, sending the specified information through the existing DCI for scheduling may include one of: sending the specified information through DCI for scheduling a paging message; or sending the specified information through DCI for scheduling dedicated data of the UE.

In an exemplary embodiment of the present disclosure, sending the specified information through the existing DCI for scheduling may include one of: adding a field for carrying the specified information in the existing DCI; redefining a specified field in the existing DCI, and the redefined specified field may be indicative of the specified information; indicating the specified information by adopting one of the followings in the existing DCI: a reserved bit, an idle bit, or an idle state of a specified field; or indicating different specified information by scrambling or masking a Cyclic Redundancy Check (CRC) of the existing DCI by adopting different P-RNTIs.

In an exemplary embodiment of the present disclosure, sending the specified information through the DCI dedicated to sending of the specified information may include: indicating the specified information by scrambling or masking a CRC of the DCI dedicated to sending of the specified information by adopting a dedicated P-RNTI.

In an exemplary embodiment of the present disclosure, when the specified information is sent through the DCI dedicated to sending of the specified information, the DCI dedicated to sending of the specified information may have no corresponding PDSCH or PUSCH.

In an exemplary embodiment of the present disclosure, sending the specified information through the MIB information may include one of: indicating the specified information by adopting an idle bit in an MIB; defining a field for indicating the specified information in the MIB; or indicating different specified information by scrambling or masking a CRC of the MIB by adopting different sequences.

In an exemplary embodiment of the present disclosure, the system message change information may include: system message change information on one or more working bands.

According to another exemplary embodiment of the present disclosure, a method for receiving downlink information is provided, which may include the following acts. UE receives specified information according to a predetermined manner. The specified information may include at least one of: system message change information, ETWS notification information, CMAS notification information or EAB parameter change notification information, and the predetermined manner may be different from a manner of receiving the specified information through a paging message.

In an exemplary embodiment of the present disclosure, the predetermined manner may include one of: receiving the specified information through existing DCI for scheduling; receiving the specified information on DCI dedicated to sending of the specified information; receiving the specified information on a PDSCH or PUSCH scheduled by DCI dedicated to sending of the specified information; receiving the specified information through MIB information; or receiving the specified information on a channel dedicated to sending of the specified information.

In an exemplary embodiment of the present disclosure, receiving the specified information through the existing DCI for scheduling may include one of: receiving the specified information on DCI for scheduling a paging message; or receiving the specified information through DCI for scheduling dedicated data of the UE.

According to another exemplary embodiment of the present disclosure, a device for sending downlink information is provided, which may include a determination module and a sending module. The determination module is configured to determine specified information to be sent to UE, and the specified information may include at least one of: system message change information, ETWS notification information, CMAS notification information or EAB parameter change notification information. The sending module is configured to send the specified information to the UE according to a predetermined manner, and the predetermined manner may be different from a manner of sending the specified information through a paging message.

In an exemplary embodiment of the present disclosure, the sending module may be configured to send the specified information according to the predetermined manner including one of: sending the specified information through existing DCI for scheduling; sending the specified information through DCI dedicated to sending of the specified information; sending the specified information through a PDSCH or PUSCH scheduled by DCI dedicated to sending of the specified information; sending the specified information through MIB information; or sending the specified information through a channel dedicated to sending of the specified information.

In an exemplary embodiment of the present disclosure, the sending module may be configured to send the specified information through the existing DCI for scheduling according to one of the following manners of: sending the specified information through DCI for scheduling a paging message; or sending the specified information through DCI for scheduling dedicated data of the UE.

According to still another exemplary embodiment of the present disclosure, a device for receiving downlink information is provided, which may be applied to UE and include a receiving module. The receiving module is configured to receive specified information according to a predetermined manner, the specified information may include at least one of: system message change information, ETWS notification information, CMAS notification information or EAB parameter change notification information, and the predetermined manner may be different from a manner of receiving the specified information through a paging message.

In an exemplary embodiment of the present disclosure, the receiving module may be configured to receive the specified information according to the predetermined manner including one of: receiving the specified information through existing DCI for scheduling; receiving the specified information on DCI dedicated to sending of the specified information; receiving the specified information on a PDSCH or PUSCH scheduled by DCI dedicated to sending of the specified information; receiving the specified information through MIB information; or receiving the specified information on a channel dedicated to sending of the specified information.

In an exemplary embodiment of the present disclosure, the receiving module may be configured to receive the specified information through the existing DCI for scheduling according to one of the following manners of: receiving the specified information on DCI for scheduling a paging message; or receiving the specified information through DCI for scheduling dedicated data of the UE.

According to some exemplary embodiments of the present disclosure, the specified information to be sent to the UE in a related technology is sent in the predetermined manner different from the sending manner of sending the specified information through the paging message. In this way, the problems in the related technology that the UE may need to receive many repeated unnecessary paging messages and the like are solved, influence on dedicated information reception of the UE is further reduced, and the problem of energy consumption of the UE caused by reception of lots of repeated paging messages is solved.

### Brief Description of the Drawings

The drawings described here are adopted to provide a further understanding to the present disclosure, and form a part of the present disclosure. Schematic embodiments of the present disclosure and descriptions thereof are adopted to explain the present disclosure and not intended to form limits to the present disclosure. In the drawings:
Fig. 1 is a flowchart of a method for sending downlink information according to an exemplary embodiment of the present disclosure; and
Fig. 2 is a structure block diagram of a device for sending DCI according to an exemplary embodiment of the present disclosure.

### Detailed Description of the Embodiments

The present disclosure will be described below in detail with reference to the drawings and embodiments. It may be appreciated that the embodiments in the present disclosure and characteristics in the embodiments may be combined under the condition of no conflicts.

For UE with a coverage enhancement requirement and in a connected state, in order to correctly receive paging messages, the UE may need to receive much repeated control information for scheduling the paging messages and lots of repeated paging messages. Dedicated information reception of MTC UE which only supports an RF narrow band is influenced. On the other hand, if dedicated information is sent on another narrow band, it may be unfavorable for energy saving of the MTC UE. Even though a blind transmission manner may be adopted for the paging messages, that is, no scheduling via control information is adopted, the paging messages include relatively much information and a TBS is relatively large, so that it may still be necessary to receive lots of repeated paging messages. In order to solve this problem, the exemplary embodiments of the present disclosure redefine a paging manner for the UE in the connected state (but not limited to the UE in this state). Detailed descriptions will be made below.

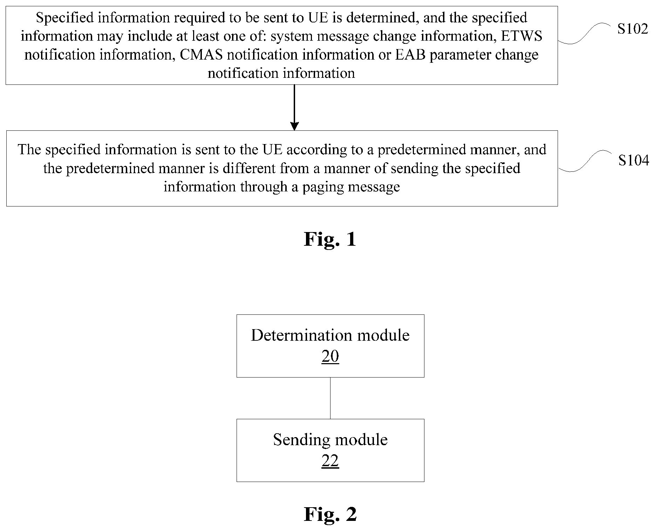

Fig. 1 is a flowchart of a method for sending downlink information according to an exemplary embodiment of the present disclosure. As shown in Fig. 1, the method may include the following processing acts S102 to S104.

At act S102, specified information to be sent to UE is determined, and in the exemplary embodiment, the specified information may include at least one of: system message change information, ETWS notification information, CMAS notification information or EAB parameter change notification information.

At act S104, the specified information is sent to the UE according to a predetermined manner, and in the exemplary embodiment, the predetermined manner may be different from a manner of sending the specified information through a paging message.

By each of the abovementioned processing acts, the specified information to be sent to the UE through the paging message in the related technology may be sent according to the manner different from the manner of sending the specified information through the paging message. In this way, the problems that the UE may need to receive many repeated unnecessary paging messages and the like are solved, influence on dedicated information reception of the UE is further reduced, and the problem of energy consumption of the UE caused by reception of lots of repeated paging messages is solved.

In an exemplary embodiment, the predetermined manner may include, but not limited to, one of the following predetermined manners.

The specified information may be sent through existing DCI for scheduling. Sending the specified information through the existing DCI for scheduling may include one of: sending the specified information through DCI for scheduling a paging message, or sending the specified information through DCI for scheduling dedicated data of the UE. The existing DCI may be understood to be DCI mentioned in an existing communication standard.

The specified information may be sent through DCI dedicated to sending of the specified information. In an exemplary embodiment, the specified information may be indicated by scrambling or masking a CRC of the DCI dedicated to sending of the specified information by adopting a dedicated P-RNTI, and when the specified information is sent through the DCI dedicated to sending of the specified information, the DCI dedicated to sending of the specified information may have no corresponding PDSCH or PUSCH. The dedicated P-RNTI may be understood as a P-RNTI different from a P-RNTI indicating the paging message, and may also be understood as a P-RNTI for indicating the specified information by scrambling or masking the DCI dedicated to sending of the specified information.

The specified information may be sent through a PDSCH or PUSCH scheduled by DCI dedicated to sending of the specified information.

The specified information may be sent through MIB information. The MIB information may be represented as, but not limited to, one of the following implementation forms in an exemplary implementation mode: indicating the specified information by adopting an idle bit in an MIB, defining a field for indicating the specified information in the MIB, or indicating different specified information by scrambling or masking a CRC of the MIB by adopting different sequences.

The specified information may be sent through a channel dedicated to sending of the specified information.

In an exemplary implementation mode of the present disclosure, sending the specified information through the scheduling existing DCI may be implemented in, but not limited to, one of the following manners of:
adding a field for carrying the specified information in the existing DCI;
redefining a specified field in the existing DCI, where the redefined specified field is indicative of the specified information;
indicating the specified information by adopting one of the followings in the existing DCI: a reserved bit, an idle bit, or an idle state of a specified field; or
indicating different specified information by scrambling or masking a CRC of the existing DCI by adopting different P-RNTIs.

The system message change information may include: system message change information on one or more working bands.

In an embodiment, a device for sending downlink information is also provided, which is configured to implement the abovementioned method. As shown in Fig. 2, the device may include a determination module 20 and a sending module 22.

The determination module 20 is configured to determine specified information to be sent to UE through a paging message. The specified information may include at least one of: system message change information, ETWS notification information, CMAS notification information or EAB parameter change notification information.

The sending module 22 is configured to send the specified information to the UE according to a predetermined manner. The predetermined manner may be different from a manner of sending the specified information through the paging message.

In an exemplary embodiment of the present disclosure, the sending module 22 may be configured to send the specified information according to the predetermined manner including one of: sending the specified information through existing DCI for scheduling; sending the specified information through DCI dedicated to sending of the specified information; sending the specified information through a PDSCH or PUSCH scheduled by DCI dedicated to sending of the specified information; sending the specified information through MIB information; or sending the specified information through a channel dedicated to sending of the specified information.

It may be appreciated that each of the abovementioned modules may be implemented through software or hardware. The latter condition may be implemented in, but not limited to, the following manner: the determination module 20 and the sending module 22 may be located in the same processor; or, the determination module 20 and the sending module 22 may be located in a first processor and a second processor respectively.

A UE side is further improved in the exemplary embodiments of the present disclosure. An exemplary embodiment of the present disclosure provides a method for receiving downlink information, which may include the following act.

UE receives specified information according to a predetermined manner. The specified information may include at least one of: system message change information, ETWS notification information, CMAS notification information or EAB parameter change notification information, and the predetermined manner may be different from a manner of receiving the specified information through a paging message.

In an exemplary embodiment of the present disclosure, the predetermined manner may include one of: receiving the specified information through existing DCI for scheduling; receiving the specified information on DCI dedicated to sending of the specified information; receiving the specified information on a PDSCH or PUSCH scheduled by DCI dedicated to sending of the specified information; receiving the specified information through MIB information; or receiving the specified information on a channel dedicated to sending of the specified information.

In an exemplary embodiment of the present disclosure, receiving the specified information through the existing DCI for scheduling may include one of: receiving the specified information on DCI for scheduling a paging message; or receiving the specified information through DCI for scheduling dedicated data of the UE.

Another exemplary embodiment of the present disclosure further provides a device for receiving downlink information, which is applied to UE and may include a receiving module. The receiving module is configured to receive specified information according to a predetermined manner. The specified information may include at least one of: system message change information, ETWS notification information, CMAS notification information or EAB parameter change notification information, and the predetermined manner may be different from a manner of receiving the specified information through a paging message.

In an exemplary embodiment of the present disclosure, the receiving module is configured to receive the specified information according to the predetermined manner including one of:
receiving the specified information through existing DCI for scheduling, the existing DCI referring to DCI existing in the related technology;
receiving the specified information on DCI dedicated to sending of the specified information;
receiving the specified information on a PDSCH or PUSCH scheduled by DCI dedicated to sending of the specified information;
receiving the specified information through MIB information; or
receiving the specified information on a channel dedicated to sending of the specified information.

In an exemplary implementation process, the receiving module may be further configured to receive the specified information through the existing DCI for scheduling according to one of the following manners of: receiving the specified information on DCI for scheduling a paging message; or receiving the specified information through DCI for scheduling dedicated data of the UE.

As mentioned above, each of the abovementioned modules involved in the embodiment may be implemented through software, and may also be implemented through corresponding hardware. The latter condition may be implemented in, but not limited to, the following manner: the receiving module may be located in a processor.

For better understanding the abovementioned embodiments, detailed descriptions will be made below with reference to exemplary embodiments. It may be appreciated that specified information involved in the following embodiments may be defined as follows. One or more of system message change information, ETWS notification information, CMAS notification information or EAB parameter change notification information may be defined as the specified information.

### First embodiment

DCI for scheduling a paging message may include specified information.

A field for indicating the specified information may be added into the DCI for scheduling a paging message. Or some fields in the DCI may be redefined to indicate the specified information, for example, a Hybrid Automatic Repeat Request (HARQ) process indication field may be redefined as a field for indicating the specified information. Or a reserved bit or idle bit or an idle state of some fields in the DCI for scheduling a paging message may also be adopted for indication, for example, a reserved bit in DCI format 1A may be adopted for indication, an HARQ process number indication field (3 bits), or a high bit (1 bit) of a Transmission Power Control (TPC) command field of a PUCCH or the like may be adopted for indication, or a reserved state of a Modulation and Coding Scheme (MCS) may be adopted for indication. During practical application, the methods for indication are not limited to the above manners. Specific indication examples are given below. As an example, 3bit information may be adopted to represent whether there is system message change information, ETWS notification information and CMAS notification information or not. For example, a first bit in the 3bit information may indicate that a system message changes if being "1", and may indicate that the system message does not change if being "0". A second bit in the 3bit information may indicate that an eNB is intended to send an ETWS message, i.e. a System Information Block (SIB) 10 and/or SIB11 if being "1 ", and may indicate that the eNB is not intended to send the ETWS message if being "0". A third bit in the 3bit information may indicate that the eNB is intended to send a CMAS message, i.e. SIB12, if being "1 ", and may indicate that the eNB is not intended to send the CMAS message if being "0". If the 3bit information is "100", it represents that the system message changes and the eNB is not intended to send the ETWS and CMAS messages, and after receiving the information, UE may receive the system message but does not receive SIB10 and SIB11 corresponding to an ETWS and SIB12 corresponding to a CMAS. During practical application, the methods for indication are not limited to such an indication manner. If the UE or the eNB does not support the ETWS and/or the CMAS, the information may not be included. For example, if the UE or the eNB does not support any of the both functions, only one bit may be required to represent whether the system message changes or not. The system message change information, ETWS notification information and CMAS notification information in the paging message scheduled by the DCI may be reserved or removed, which will not be limited in the embodiment.

Furthermore, the system message change information in the DCI may be system message change information on one or more working bands. In an exemplary embodiment of the present disclosure, the one or more working bands may be working bands of one or more pieces of MTC UE. If a system bandwidth includes multiple working narrow bands and there is corresponding system information on multiple narrow bands (a number of the narrow bands where the system information is located is not larger than a total number of the working narrow bands), it may be suggested to indicate whether system messages on the multiple narrow bands change or not. As an example, 1bit may be adopted to represent whether the system messages on the multiple narrow bands change or not. For example, if the system message on none of the narrow bands changes, the 1 bit information may be set as "0" for indication, otherwise the 1 bit information may be set as "1" for indication. Multiple bits may also be adopted to represent that the system messages on the multiple narrow bands change respectively. For example, there may be 5 working narrow bands in a system, there is system information on each working narrow band, and 5 bits may be adopted to indicate whether system messages on the 5 narrow bands change or not. Or, if there is system information on only 2 narrow bands in the 5 working narrow bands, 2 bits may be adopted to indicate whether the system messages on the two narrow bands change or not. If the system messages on 3 narrow bands are completely the same and the system messages on the other 2 narrow bands are completely the same although there is system information on each working narrow band in the 5 working narrow bands, 2 bits may be adopted to indicate whether the two types of system messages change or not.

When the system bandwidth includes multiple working narrow bands, specified information on the multiple working narrow bands may also be indicated to the UE. If the specified information is indicated by 3 bits, 3×5=15 bits may be required to indicate the specified information on the 5 working narrow bands. During practical application, the methods for indication are not limited to the above indication manner.

UE in a connected state may receive the DCI specifying the paging message only and acquire the specified information from the DCI, and is not required to receive the paging message scheduled by the DCI for acquisition of the specified information.

### Second embodiment

Specified information is indicated in DCI for scheduling dedicated data of UE, and is namely indicated in DCI for scheduling the UE to send a PUSCH or receive a PDSCH. In such a manner, an eNB may notify the UE of the specified information when the UE is scheduled to send or receive data. For example, a field for indicating the specified information may be added into the DCI for scheduling the dedicated data of the UE, or some reserved bits or idle bits or an idle state of some fields may be adopted for indication, or some existing fields may be redefined for indication. The DCI may be DCI of all formats, and may also be DCI of part of formats, for example, format1A. An indication method is similar to the method described in the first embodiment.

After receiving the DCI for scheduling the UE, the UE obtains the specified information according to the field. For example, if 3bit information indicates whether there is system message change information, ETWS notification information and CMAS notification information or not respectively and the field obtained by the UE is "000", it represents that a system message does not change and the eNB is not intended to send ETWS and CMAS messages, and the UE may not receive the system message and SIB10∼12. During practical application, the methods for indication are not limited to the above indication manner.

### Third embodiment

Specified information may be notified by adopting different P-RNTIs. That is, the specified information may be represented by scrambling or masking a CRC of DCI for scheduling a paging message or a CRC of DCI for scheduling dedicated data of UE by adopting different P-RNTIs. Similar to the first embodiment, system information may also be system information on multiple narrow bands. System message change information, ETWS notification information and CMAS notification information in the paging message scheduled by the DCI may be reserved or removed, which will not be limited in the embodiment of the present disclosure.

If the UE or an eNB does not support an ETWS and/or a CMAS and is only required to support a system message change, the CRC of the DCI for scheduling a paging message may be scrambled or masked by adopting P-RNTI_1 to indicate that the system message does not change, and the CRC of the DCI for scheduling a paging message is scrambled or masked by adopting P-RNTI_2 to indicate that the system message changes. The UE descrambles or demasks the CRC of the DCI by adopting P-RNTI_1 and P-RNTI_2 respectively, and performs CRC to judge the P-RNTI which is adopted to determine whether the system message changes or not. In the embodiment, a scrambling or masking manner may adopt a bitwise "exclusive or" operation. If the P-RNTI is 16-bit, the CRC is also 16-bit, and an "exclusive or" operation is executed on the bits at the corresponding locations. For example, the P-RNTI is "0000110100001111" and the CRC is "1111001111110011", the CRC is scrambled by the P-RNTI to obtain "1111111011111100". A receiving party executes a bitwise "exclusive or" operation on the scrambled CRC and the P-RNTI to obtain the CRC. The practical application is not limited to such a scrambling or masking manner.

### Fourth embodiment

Dedicated DCI may be redefined to notify specified information. A CRC of the DCI is scrambled or masked by adopting a dedicated P-RNTI (that is, the dedicated P-RNTI is adopted for scrambling or masking). The DCI has no corresponding scheduled PDSCH or PUSCH. For example, if system message change information, notification information and CMAS notification information are required to be notified, the system message change information is 1 bit, the ETWS notification information is 1 bit and the CMAS notification information is 1 bit, 3 bits are adopted to indicate the information in the DCI. The DCI may have useful information of only 3 bits, or may also have some redundant bits which are not defined in this exemplary embodiment, or these redundant bits may also be adopted to indicate some other public information. The use of the redundant bits is not limited in the embodiment of the present disclosure. Furthermore, for avoiding increase of the number of blind detection times of UE, a size of the DCI may be the same as some existing DCI, and for example, may be equal to format 1 C. The DCI may be sent on some preset subframes, and may also be sent on a paging occasion of a cell.

UE in a connected state detects the DCI scrambled or masked by the P-RNTI on the preset subframes or the paging occasion of the cell, and obtains the specified information according to content of the DCI. In the embodiment, a scrambling or masking manner may adopt, but not limited to, a bitwise "exclusive or" operation.

### Fifth embodiment

Specified information may be sent through a PDSCH or PUSCH scheduled by dedicated DCI (i.e. DCI dedicated to sending of the specified information), a CRC of the dedicated DCI may be scrambled or masked by adopting a dedicated P-RNTI. The DCI may adopt an existing DCI format, for example, format 1C; or a new DCI format may be defined. A TBS of the PDSCH scheduled by the dedicated DCI may continue adopting an existing TBS, and may also be redefined, which will not be limited by the embodiment of the present disclosure. The advantage is that UE may acquire the specified information as fast as possible because more resources may be adopted to transmit small packets and a code rate may be very low. The dedicated DCI and the scheduled PDSCH may be sent on some preset subframes, and may also be sent on a paging occasion of a cell.

UE in a connected state detects the dedicated DCI scrambled or masked by adopting the P-RNTI on the preset subframes or the paging occasion of the cell, and acquires the specified information loaded on the scheduled PDSCH according to the DCI. In the embodiment, a scrambling or masking manner may adopt, but not limited to, a bitwise "exclusive or" operation.

### Sixth embodiment

Specified information may be indicated in an MIB. The MIB may be an existing MIB. For example, a plurality of bits in 10 idle bits in the MIB may be adopted to indicate the specified information. The indication information in the MIB may be kept unchanged in a period, and for example, may be kept unchanged in a paging period. The period may not be limited to the paging period, and may be a newly defined period.

Alternatively, a new MIB may be defined, and a field may be defined in the new MIB to indicate the specified information. The field in the MIB may be kept unchanged in a period, and for example, may be kept unchanged in a paging period. The period may not be limited to the paging period, and may be a newly defined period. Alternatively, a CRC of the new MIB may also be scrambled or masked by adopting an idle scrambling code to indicate the specified information, and the scrambling code may be kept unchanged in a paging period. The period may not be limited to the paging period, and may be a newly defined period. In the embodiment, a scrambling or masking manner may adopt, but not limited to, a bitwise "exclusive or" operation.

UE in a connected state receives the MIB to obtain the specified information at least once in the period.

### Seventh embodiment

A dedicated channel (i.e. a channel dedicated to sending of specified information) may be newly defined, and the specified information may be transmitted on the dedicated channel. The channel may be sent on a preset symbol of a preset subframe and a preset frequency-domain location, for example, 6 central Physical Resource Blocks (PRBs) of last three symbols on a subframe #0. During practical application, the sending of the channel is not limited to such exemplary manner. Information included in a preset period may be kept unchanged, and for example, information included in a paging period may be kept unchanged. UE may receive information on the channel on the subframe within the preset period to obtain the specified information.

### Embodiment 8

UE may receive specified information according to a predetermined manner. The specified information may at least include EAB parameter change notification information. The predetermined manner is different from a manner of receiving the specified information through a paging message. The predetermined manner may be at least one of the predetermined manners described in the first embodiment to the seventh embodiment. To be more specific, the predetermined manner may be at least one of: receiving the specified information through existing DCI for scheduling; receiving the specified information on DCI dedicated to sending of the specified information; receiving the specified information on a PDSCH or PUSCH scheduled by DCI dedicated to sending of the specified information; receiving the specified information through MIB information; or receiving the specified information on a channel dedicated to sending of the specified information.

The EAB parameter change notification information may be 1bit information. For example, the 1 bit information being "0" indicates that an EAB parameter does not change, and the 1 bit information being "1" indicates that the EAB parameter changes. If the EAB parameter change notification information received by the UE is "1", the UE may receive changed EAB parameter information. In an existing LTE system, EAB parameter information is included in SIB14, and if the EAB parameter change notification information received by the UE is "1", the UE may receive SIB14 again. In a future practical system, an EAB parameter may also be included in a newly defined SIB.

In another embodiment, software is further provided, which is configured to execute the solutions described in the abovementioned embodiments and exemplary implementation modes.

In another embodiment, a storage medium is further provided, in which the abovementioned software is stored, the storage medium including, but not limited to: an optical disk, a floppy disk, a hard disk, an erasable memory and the like.

Obviously, those skilled in the art should know that each module or each act of the present disclosure may be implemented by a universal computing device, and the modules or acts may be concentrated on a single computing device or distributed on a network formed by a plurality of computing devices, and may optionally be implemented by program codes executable for the computing devices, so that the modules or acts may be stored in a storage device for execution with the computing devices, the shown or described acts may be executed in sequences different from those described here in some circumstances, or may form each integrated circuit module respectively, or multiple modules or acts therein may form a single integrated circuit module for implementation. As a consequence, the present disclosure is not limited to any specific hardware and software combination.

The above is only the exemplary embodiment of the present disclosure and not intended to limit the scope of protection of the present disclosure. For those skilled in the art, the present disclosure may have various modifications and variations. Any modifications, equivalent replacements, improvements and the like made within the principle of the present disclosure shall fall within the scope of protection defined by the appended claims of the present disclosure.

### Industrial Applicability

Some embodiments of the present disclosure may be applied to a downlink information sending process. According to some embodiments, the specified information to be sent to the UE in the related technology is sent in the predetermined manner different from the sending manner of sending the specified information through the paging message. In this way, the problems in the related technology that the UE may need to receive many repeated unnecessary paging messages and the like are solved, influence on dedicated information reception of the UE is further reduced, and the problem of energy consumption of the UE caused by reception of lots of repeated paging messages is solved.

## Claims

1. A method for sending downlink information, comprising:
determining specified information to be sent to User Equipment, UE, wherein the specified information comprises at least one of: system message change information, Earthquake and Tsunami Warning System, ETWS, notification information, Commercial Mobile Alert Service, CMAS, notification information or Extended Access Barring, EAB, parameter change notification information; and
sending the specified information to the UE according to a predetermined manner, wherein the predetermined manner is different from a manner of sending the specified information through a paging message.

2. The method as claimed in claim 1, wherein the predetermined manner comprises one of:
sending the specified information through existing Downlink Control Information, DCI, for scheduling;
sending the specified information through DCI dedicated to sending of the specified information;
sending the specified information through a Physical Downlink Shared Channel, PDSCH, or Physical Uplink Shared Channel, PUSCH, scheduled by DCI dedicated to sending of the specified information;
sending the specified information through Master Information Block, MIB, information; or
sending the specified information through a channel dedicated to sending of the specified information.

3. The method as claimed in claim 2, wherein sending the specified information through the existing DCI for scheduling comprises one of:
sending the specified information through DCI for scheduling a paging message; or
sending the specified information through DCI for scheduling dedicated data of the U E.

4. The method as claimed in claim 2, wherein sending the specified information through the existing DCI for scheduling comprises one of:
adding a field for carrying the specified information in the existing DCI;
redefining a specified field in the existing DCI, wherein the redefined specified field is indicative of the specified information;
indicating the specified information by adopting one of the followings in the existing DCI: a reserved bit, an idle bit, or an idle state of a specified field; or
indicating different specified information by scrambling or masking a Cyclic Redundancy Check, CRC, of the existing DCI by adopting different Paging Radio Network Temporary Identifiers, P-RNTIs.

5. The method as claimed in claim 2, wherein sending the specified information through the DCI dedicated to sending of the specified information comprises:
indicating the specified information by scrambling or masking a Cyclic Redundancy Check, CRC, of the DCI dedicated to sending of the specified information by adopting a dedicated Paging Radio Network Temporary Identifier, P-RNTI.

6. The method as claimed in claim 2, wherein, when the specified information is sent through the DCI dedicated to sending of the specified information, the DCI dedicated to sending of the specified information has no corresponding PDSCH or PUSCH.

7. The method as claimed in claim 2, wherein sending the specified information through the MIB information comprises one of:
indicating the specified information by adopting an idle bit in an MIB;
defining a field for indicating the specified information in the MIB; or
indicating different specified information by scrambling or masking a Cyclic Redundancy Check, CRC, of the MIB by adopting different sequences.

8. The method as claimed in any one of claims 1 to 7, wherein the system message change information comprises:
system message change information on one or more working bands.

9. A method for receiving downlink information, comprising:
receiving, by User Equipment, UE, specified information according to a predetermined manner, wherein the specified information comprises at least one of: system message change information, Earthquake and Tsunami Warning System, ETWS, notification information, Commercial Mobile Alert Service, CMAS, notification information or Extended Access Barring, EAB, parameter change notification information, and the predetermined manner is different from a manner of receiving the specified information through a paging message.

10. The method as claimed in claim 9, wherein the predetermined manner comprises one of:
receiving the specified information through existing Downlink Control Information, DCI, for scheduling;
receiving the specified information on DCI dedicated to sending of the specified information;
receiving the specified information on a Physical Downlink Shared Channel, PDSCH, or Physical Uplink Shared Channel, PUSCH, scheduled by DCI dedicated to sending of the specified information;
receiving the specified information through Master Information Block, MIB, information; or
receiving the specified information on a channel dedicated to sending of the specified information.

11. The method as claimed in claim 10, wherein receiving the specified information through the existing DCI for scheduling comprises one of:
receiving the specified information on DCI for scheduling a paging message; or
receiving the specified information through DCI for scheduling dedicated data of the U E.

12. A device for sending downlink information, comprising:
a determination module, configured to determine specified information to be sent to User Equipment, UE, wherein the specified information comprises at least one of: system message change information, Earthquake and Tsunami Warning System, ETWS, notification information, Commercial Mobile Alert Service, CMAS, notification information or Extended Access Barring, EAB, parameter change notification information; and
a sending module, configured to send the specified information to the UE according to a predetermined manner, wherein the predetermined manner is different from a manner of sending the specified information through a paging message.

13. The device as claimed in claim 12, wherein the sending module is configured to send the specified information according to the predetermined manner comprising one of:
sending the specified information through existing Downlink Control Information, DCI, for scheduling;
sending the specified information through DCI dedicated to sending of the specified information;
sending the specified information through a Physical Downlink Shared Channel, PDSCH, or Physical Uplink Shared Channel, PUSCH, scheduled by DCI dedicated to sending of the specified information;
sending the specified information through Master Information Block, MIB, information; or
sending the specified information through a channel dedicated to sending of the specified information.

14. The device as claimed in claim 13, wherein the sending module is configured to send the specified information through the existing DCI for scheduling according to one of the following manners of:
sending the specified information through DCI for scheduling a paging message; or
sending the specified information through DCI for scheduling dedicated data of the U E.

15. A device for receiving downlink information, applied to User Equipment, UE, and comprising:
a receiving module, configured to receive specified information according to a predetermined manner, wherein the specified information comprises at least one of: system message change information, Earthquake and Tsunami Warning System, ETWS, notification information, Commercial Mobile Alert Service, CMAS, notification information or Extended Access Barring, EAB, parameter change notification information, and the predetermined manner is different from a manner of receiving the specified information through a paging message.

16. The device as claimed in claim 15, wherein the receiving module is configured to receive the specified information according to the predetermined manner comprising one of:
receiving the specified information through existing Downlink Control Information, DCI, for scheduling;
receiving the specified information on DCI dedicated to sending of the specified information;
receiving the specified information on a Physical Downlink Shared Channel, PDSCH, or Physical Uplink Shared Channel, PUSCH, scheduled by DCI dedicated to sending of the specified information;
receiving the specified information through Master Information Block, MIB, information; or
receiving the specified information on a channel dedicated to sending of the specified information.

17. The device as claimed in claim 16, wherein the receiving module is configured to receive the specified information through the existing DCI for scheduling according to one of the following manners of:
receiving the specified information on DCI for scheduling a paging message; or
receiving the specified information through DCI for scheduling dedicated data of the UE.
